# EUROPÄISCHE PATENTSCHRIFT

(11) **EP 2 694 845 B1**
(45) Veröffentlichungstag und Bekanntmachung des Hinweises auf die Patenterteilung: **16.11.2016**
(21) Anmeldenummer: 12707543.0
(22) Anmeldetag: 02.03.2012
(51) Int. Cl.: F16H 61/04

(54) **VERFAHREN ZUM STEUERN EINER GETRIEBEBREMSE FÜR EIN AUTOMATISIERTES SCHALTGETRIEBE**
METHOD FOR CONTROLLING A GEAR BRAKE FOR AN AUTOMATED CHANGE-SPEED GEARBOX
PROCÉDÉ PERMETTANT DE COMMANDER UN FREIN SUR TRANSMISSION D'UNE BOÎTE DE VITESSES AUTOMATIQUE

(30) Priorität: 08.04.2011 DE 102011007079
(43) Veröffentlichungstag der Anmeldung: 12.02.2014
(73) Patentinhaber: ZF Friedrichshafen AG, 88046 Friedrichshafen (DE)
(72) Erfinder: STEINBORN, Mario, 88046 Friedrichshafen (DE); BREUER, Jochen, 88069 Tettnang (DE); RÜCHARDT, Christoph, 88131 Bodolz (DE); JÄGER, Thomas, 88074 Meckenbeuren (DE); MAIR, Roland, 88069 Tettnang (DE); MORO-OLIVEROS, Melchor, 88074 Meckenbeuren (DE)
(86) Internationale Anmeldenummer: PCT/EP2012/053593
(87) Internationale Veröffentlichungsnummer: WO 2012/136424

(56) Entgegenhaltungen:
- DE-A1- 3 136 725
- DE-A1-102004 045 828
- DE-A1-102006 040 476
- DE-A1-102007 018 967
- DE-A1-102008 001 686
- US-A- 4 742 461

## Beschreibung

Die Erfindung betrifft ein Verfahren zum Steuern einer Getriebebremse für ein automatisiertes Schaltgetriebe gemäß dem Oberbegriff des Patentanspruchs 1.

Automatisierte Schaltgetriebe werden seit geraumer Zeit in unterschiedlichen Kraftfahrzeugtypen genutzt. Die Schaltbewegungen zum Schalten von Gangstufen, zum Betätigen von Kupplungen und Getriebebremsen werden üblicherweise von druckmittelbetätigten Stellzylindern ausgeführt.

Derartige Schaltgetriebe verwenden zumindest teilweise den Vorratsdruck eines Fahrzeugs, in welchem sie eingebaut sind. Die Schaltelemente, d.h. die Hauptabschaltventile und die diesen nachgeordneten Schaltventile werden entweder direkt mit diesem Vorratsdruck bzw. Systemdruck des Fahrzeuges oder mit einem beispielsweise mittels Druckminderventilen oder dergleichen abgesenkten konstanten Betriebsdruck versorgt. Das bedeutet, dass die Belastung der Schaltelemente, die Schaltzeiten, die Schaltgeräusche usw. nicht oder nur in geringem Maße beeinflusst werden können. Insbesondere bei den Getriebebremsen besteht das Problem, dass deren Funktion einer fertigungsbedingten Streuung unterliegt, so dass deren Ansteuerung problematisch und die für ein effizientes Schalten erwünschte Zuverlässigkeit und Genauigkeit nicht immer erreichbar ist.

Aus der DE 10 2008 001 686 A1 ist bereits ein Verfahren zur Schaltsteuerung eines automatisierten Schaltgetriebes bekannt, bei welchem die Funktion einer Getriebebremse mit weitgehend konstantem Bremsmoment bei einer beispielsweise durch aktuelle Umgebungs- oder Betriebstemperaturen oder den Verschleißzustand der Reibbeläge bedingten Abweichung von einem Sollwert durch kurzfristiges Schließen der automatisiert steuerbaren Trennkupplung unterstützt wird. Diese Maßnahme erlaubt es jedoch nicht, das tatsächliche aktuelle Bremsmoment bzw. dessen Abweichung vom Soll-Bremsmoment zu bestimmen und auszusteuern.

Aus der DE 10 2004 045 828 A1 sind verschiedene Verfahren zur Erweiterung der Funktion einer Getriebebremse bekannt. So wird beispielsweise offenbart, dass das einzustellende Getriebebremsmoment durch Einbeziehung der bekannten Trägheitsmomente der aktuell zu bremsenden Massen und/oder dem vorhandenen Drehzahlgradienten an der Getriebebremse erfolgt, und optional dazu der natürliche Drehzahlgradient der zu bremsenden Massen berücksichtigt wird.

Vor diesem Hintergrund liegt der Erfindung die Aufgabe zugrunde, ein Verfahren zum Steuern einer Getriebebremse an einem automatisierten Schaltgetriebe der im Oberbegriff des Anspruchs 1 genannten Art vorzustellen, bei dem das aktuelle Bremsmoment der Getriebebremse bei einem vorgegebenen Betätigungsdruck bestimmbar und diese Erkenntnis für spätere Bremsbetätigungen nutzbar ist.

Die Lösung dieser Aufgabe ergibt sich aus den Merkmalen des Anspruchs 1.

Der Erfindung liegt die Erkenntnis zugrunde, dass der Drehzahlverlauf von abgebremsten bekannten Massen des Getriebes oder auch ein gegen die Bremswirkung der Getriebebremse arbeitendes bekanntes Drehmoment des Antriebsmotors jeweils ein Maß zur Bestimmung des aktuellen Bremsmoments der Getriebebremse ist.

Eine erste hier nicht beanspruchte Variante betrifft ein Verfahren zum Steuern des Betriebs einer Getriebebremse an einem automatisierten, über eine Trennkupplung mit einem Antriebsmotor eines Kraftfahrzeugs koppelbaren Schaltgetriebe, mit einem über zugeordnete Be- und Entlüftungsventile druckmittelbetätigten Stellzylinder für die Getriebebremse, und mit wenigstens einem den Be- und Entlüftungsventilen vorgeordneten Hauptabschaltventil, über das ein dem Stellzylinder zugeführter Solldruck eines Druckmittels einregelbar ist.

Zur Lösung der gestellten Aufgabe ist bei dieser ersten Variante vorgesehen, dass bei einem Schaltvorgang bei in Neutral geschaltetem Getriebe, geöffneter Trennkupplung und geschlossener Getriebebremse der Drehzahlgradient der durch die Getriebebremse abzubremsenden drehenden Getriebeteile bestimmt wird, dass die Masse der bei diesem Schaltvorgang abzubremsenden Getriebeteile bestimmt wird, dass mit Hilfe des Drehzahlgradienten und der abzubremsenden Masse das aktuell wirksame Bremsmoment der Getriebebremse berechnet wird, dass das ermittelte aktuelle Bremsmoment dem aktuell eingeregelten Solldruck zugeordnet wird, und dass das so ermittelte Wertepaar von Solldruck und Bremsmoment in einem Datenspeicher eines Steuergeräts abgespeichert sowie bei später erfolgenden Betätigungen der Getriebebremse zur Steuerung oder Regelung dessen Bremswirkung genutzt wird.

So lässt sich umgekehrt für ein gewünschtes Soll-Bremsmoment der erforderliche Solldruck bestimmen und einregeln.

Die Erfindung betrifft ein Verfahren zum Steuern des Betriebs einer Getriebebremse an einem automatisierten, über eine Trennkupplung mit einem Antriebsmotor eines Kraftfahrzeugs koppelbaren Schaltgetriebe, mit einem über zugeordnete Be- und Entlüftungsventile druckmittelbetätigten Stellzylinder für die Getriebebremse, und mit wenigstens einem den Be- und Entlüftungsventilen vorgeordneten Hauptabschaltventil, über das ein dem Stellzylinder zugeführter Solldruck eines Druckmittels einregelbar ist.

Zur Lösung der gestellten Aufgabe ist gemäß der Erfindung vorgesehen, dass bei in Neutral geschaltetem Getriebe, geschlossener Trennkupplung und mit vorgegebener konstanter Drehzahl drehenden Antriebsmotor das Drehmoment des Antriebsmotors bestimmt wird, dass anschließend die Getriebebremse mit einem vorgegebenen Druckmittel-Solldruck geschlossen wird, dass die Erhöhung des Drehmoments des Antriebsmotors als das aktuelle Bremsmoment der Getriebebremse bestimmt wird, dass das ermittelte aktuelle Bremsmoment dem aktuell eingeregelten Solldruck zugeordnet wird, und dass das so ermittelte Wertepaar von Solldruck und Bremsmoment in einem Datenspeicher eines Steuergeräts abgespeichert sowie bei später erfolgenden Betätigungen der Getriebebremse zur Steuerung oder Regelung dessen Bremswirkung genutzt wird.

Weiter ist im Hinblick auf das erfinderische Verfahren vorgesehen, dass als vorgegebene konstante Drehzahl des Antriebsmotors die Zieldrehzahl für die gewählte Gangstufe eingeregelt wird. Eine Getriebebremse wird bekanntermaßen bei Hochschaltvorgängen zur Abbremsung einer Getriebeeingangswelle genutzt, so dass die Zieldrehzahl bei Hochschaltungen kleiner als die Drehzahl des bisherigen Getriebegangs ist.

Gemäß einer Ausgestaltung der ersten Verfahrensvariante kann vorgesehen sein, dass der Drehzahlgradient durch eine zeitliche Ableitung der Drehzahl derjenigen Welle gemessen wird, mit der die Getriebebremse verbunden ist.

Der Wert für die Masse der bei jedem Schaltvorgang abzubremsenden Getriebeteile wird vorzugsweise aus einem Datenspeicher des Steuergeräts entnommen, in den diese Werte in Kenntnis des jeweils verwendeten Antriebsstrangs abgespeichert wurden.

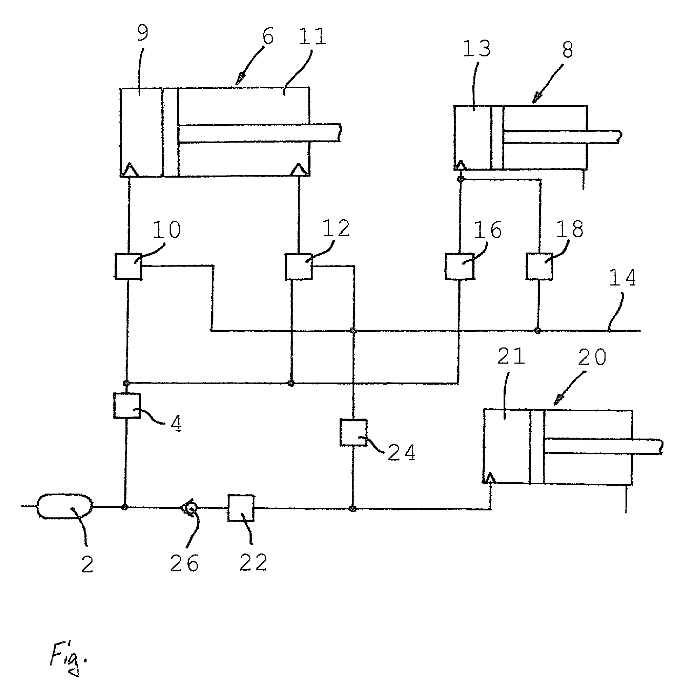

Zur weiteren Erläuterung der Erfindung ist der Beschreibung eine Zeichnung beigefügt. Diese zeigt schematisch ein Schaltschema zur Durchführung des erfindungsgemäßen Steuerungsverfahrens. Das in der einzigen Figur dargestellte Schaltsystem, beispielsweise ein pneumatisches Schaltsystem zum Schalten eines automatisierten Schaltgetriebes für Nutzfahrzeuge, wird von einem fahrzeugseitigen Druckmittelversorgungssystem, welches einen Druckmittelvorratsbehälter 2 aufweist, mit einem Druckmittel versorgt.

Das Schaltsystem umfasst im vorliegenden Fall beispielhaft ein dem Druckmittelvorratsbehälter 2 nachgeordnetes Hauptabschaltventil 4, welches die diesem Hauptabschaltventil 4 nachgeordnete Schaltungsanordnung mit dem Druckmittelvorratsbehälter 2 verbinden oder von diesem trennen kann.

Die nachgeordnete Schaltungsanordnung umfasst im dargestellten Fall zwei Stellzylinder 6 und 8, wobei der erste Stellzylinder 6 ein doppelt wirkender Stellzylinder zum Wählen einer Gangstufe oder einer Schaltgasse und der zweite Stellzylinder 8 ein einseitig wirkender Stellzylinder für die Betätigung einer Getriebebremse ist.

Die beiden Druckkammern 9 und 11 des ersten Stellzylinders 6 werden jeweils über ein zugeordnetes 3/2-Wegeventil 10 bzw. 12 befüllt bzw. über eine Druckmittelabführleitung 14 entlüftet, während die einzige Druckkammer 13 des zweiten Stellzylinders 8 über ein 2/2-Wegeventil 16 befüllt und über ein 2/2-Wegeventil 18 über die Druckmittelabführleitung 14 entlüftet wird. Die beiden Wegeventile 10, 12 werden auch als Schaltventile, die beiden Wegeventile 16, 18 als Be- und Entlüftungsventile bezeichnet.

Das Schaltsystem umfasst weiter einen dritten, einseitig wirkenden Stellzylinder 20, welcher zur Betätigung einer Trennkupplung dient, mit der das Schaltgetriebe mit einem Antriebsmotor verbindbar ist. Der einzige Druckraum 21 des dritten Stellzylinders 20 wird über ein 2/2-Wegeventil 22 befüllt und über ein 2/2-Wegeventil 24 über die Druckmittelabführleitung 14 entlüftet. Dem Wegeventil 22 zum Befüllen des Kupplungs-Stellzylinders 20 ist ein Rückschlagventil 26 vorgeordnet, um ein Entlüften des Kupplungs-Stellzylinders 20 bei einem Abfall der Druckversorgung zu verhindern.

Das aktuelle Bremsmoment der von dem Stellzylinder 8 betätigten Getriebebremse wird wie weiter vorne erläutert bestimmt. Dieses Bremsmoment steht in direktem Zusammenhang mit dem aktuell in dem Druckraum 13 des Stellzylinders 8 anliegenden Betätigungsdruck. Wenn sich eine Abweichung von dem prognostizierten Bremsmoment zu dem tatsächlichen Bremsmoment ergibt, kann durch eine regelungstechnische Anhebung das Druckmitteldrucks im Druckraum 13 das Bremsmoment der Getriebebremse angehoben werden. Um das Soll-Bremsmoment der Getriebebremse bei einer festgestellten Abweichung vom aktuellen Bremsmoment einzuregeln, wird das Hauptabschaltventil 4 geöffnet, bis der dem Soll-Bremsmoment entsprechende Solldruck am Schaltventil 16 und damit in dem Druckraum 13 des Stellzylinder 8 anliegt.

### Bezugszeichen

- 2: Druckmittelvorratsbehälter
- 4: Hauptabschaltventil
- 6: Stellzylinder
- 8: Stellzylinder
- 9: Druckraum
- 10: 3/2-Wegeventil
- 11: Druckraum
- 12: 3/2-Wegeventil
- 13: Druckraum
- 14: Druckmittelabführleitung
- 16: 2/2-Wegeventil
- 18: 2/2-Wegeventil
- 20: Stellzylinder
- 21: Druckraum
- 22: 2/2-Wegeventil
- 24: 2/2-Wegeventil
- 26: Rückschlagventil

## Patentansprüche

1. Verfahren zum Steuern des Betriebs einer Getriebebremse an einem automatisierten, über eine Trennkupplung mit einem Antriebsmotor eines Kraftfahrzeugs koppelbaren Schaltgetriebe, mit einem über zugeordnete Be- und Entlüftungsventile (16, 18) druckmittelbetätigten Stellzylinder (8) für die Getriebebremse, und mit wenigstens einem den Be- und Entlüftungsventilen (16, 18) vorgeordneten Hauptabschaltventil (4), über das ein dem Stellzylinder (8) zugeführter Solldruck eines Druckmittels einregelbar ist, wobei bei in Neutral geschaltetem Getriebe, geschlossener Trennkupplung und mit vorgegebener konstanter Drehzahl drehenden Antriebsmotor das Drehmoment des Antriebsmotors bestimmt wird, wobei als vorgegebene Drehzahl des Antriebsmotors die Zieldrehzahl für die gewählte Gangstufe eingeregelt wird, wobei anschließend die Getriebebremse mit einem vorgegebenen Druckmittel-Solldruck geschlossen wird, wobei die Erhöhung des Drehmoments des Antriebsmotors als das aktuelle Bremsmoment der Getriebebremse bestimmt wird, wobei das ermittelte aktuelle Bremsmoment dem aktuell eingeregelten Solldruck zugeordnet wird, und wobei das so ermittelte Wertepaar von Solldruck und Bremsmoment in einem Datenspeicher eines Steuergeräts abgespeichert sowie bei später erfolgenden Betätigungen der Getriebebremse zur Steuerung oder Regelung dessen Bremswirkung genutzt wird.

## Claims

1. Method for controlling the operation of a gear brake on an automated change-speed gearbox which can be coupled to a drive engine of a motor vehicle via a clutch, having an actuation cylinder (8), actuated by a pressure medium via assigned ventilating and venting valves (16, 18), for the gear brake, and having at least one main switch-off valve (4) which is arranged upstream of the ventilating and venting valves (16, 18) and via which a setpoint pressure, fed to the actuation cylinder (8), of a pressure medium can be applied, wherein the torque of the drive engine is determined when the gearbox is switched to neutral, the clutch is closed and the drive engine is rotating at a predefined constant rotational speed, wherein the target rotational speed for the selected gear stage is applied as the predefined rotational speed of the drive engine, wherein the gear brake is subsequently closed with a predefined pressure medium setpoint pressure, wherein the increase in the torque of the drive engine is determined as the current braking torque of the gear brake, wherein the determined current braking torque is assigned to the currently applied setpoint pressure, and wherein the value pair of the setpoint pressure and braking torque determined in this way is stored in a data memory of a control unit, and is used to perform open-loop or closed-loop control of the braking action of the gear brake during activations thereof which take place later.

## Revendications

1. Procédé pour commander le fonctionnement d'un frein de transmission sur une transmission à changement de vitesses automatisée, pouvant être accouplée à un moteur d'entraînement d'un véhicule automobile par le biais d'un embrayage de coupure, comprenant un cylindre de commande (8) pour le frein de transmission, pouvant être actionné par un fluide sous pression par le biais de soupapes de ventilation et de désaérage associées (16, 18), et comprenant au moins une soupape de coupure principale (4) montée en amont des soupapes de ventilation et de désaérage (16, 18), par le biais de laquelle soupape de coupure principale une pression de consigne d'un fluide sous pression, acheminée au cylindre de commande (8), peut être ajustée, le couple du moteur d'entraînement étant déterminé en position neutre de la transmission, lorsque l'embrayage de coupure est fermé et que le moteur d'entraînement tourne à régime constant prédéfini, le régime cible pour le rapport de vitesse sélectionné étant ajusté comme étant le régime prédéfini du moteur d'entraînement, le frein de transmission étant ensuite fermé avec une pression de consigne prédéfinie du fluide sous pression, l'augmentation du couple du moteur d'entraînement étant déterminée en tant que le couple de freinage actuel du frein de transmission, le couple de freinage actuel déterminé étant associé à la pression de consigne actuellement ajustée, et la paire de valeurs ainsi déterminée de la pression de consigne et du couple de freinage étant mémorisées dans une mémoire de données d'un appareil de commande, et étant utilisée lors d'actionnements subséquents du frein de transmission pour la commande ou la régulation de son effet de freinage.
